# EUROPEAN PATENT SPECIFICATION

(11) **EP 3 375 335 B1**
(45) Date of publication and mention of the grant of the patent: **26.08.2020**
(21) Application number: 18160860.5
(22) Date of filing: 09.03.2018
(51) Int. Cl.: A47J 37/07

(54) **BARBECUE GRILL WITH A TEMPERATURE HOMOGENIZATION, PROTECTION, AND GREASE GUIDE STRUCTURE**
GRILLVORRICHTUNG MIT EINER TEMPERATURHOMOGENISIERUNGS-, SCHUTZ- UND FETTFÜHRUNGSSTRUKTUR
GRILLE DU BARBECUE AVEC UNE STRCUTURE DE HOMOGÉNÉISATION DE LA TEMPÉRATURE, PROTECTION ET GUIDAGE DE LA GRAISSE

(30) Priority: 13.03.2017 CN 201720240202 U
(43) Date of publication of application: 19.09.2018
(73) Proprietor: Grand Hall Enterprise Co., Ltd., Taipei (CN)
(72) Inventor: Home, William, Cambridge, Cambridgeshire CB11AH (GB)
(74) Representative: Horak, Michael

(56) References cited:
- EP-A1- 1 444 933
- AU-A4- 2010 101 484
- US-A1- 2004 112 362
- US-A1- 2008 034 982
- US-A1- 2012 024 166

## Description

### (a) Technical Field of the Invention

The present invention relates generally to a temperature homogenization, protection, and grease guide structure in the technology field of barbecue grills and roasters, and more particularly to a structure that comprises a temperature homogenization protection section and is provided with an inclined, upward-facing arrangement of a burner and an M-shaped grease guide and temperature barrier board so that the structure, as a whole, helps homogenize a grilling temperature, provides protection to the burner, and also prevents liquids, such as grease/fat of grilled food, meat juice, and sauce, from dropping onto the burner, and conducts, in a more effective manner, grease to a grease tray.

### (b) Description of the Prior Art

Grilling and roasting are a common activity of modern people for they provided food cooked with different styles for people to enjoy and also serve as a social process of enhancing friendship and social communication.

Grilling or roasting is often conducted with a grill. The way, as well as a grate structure, that a conventional barbecue grill takes to grill or barbecue food is such that a grate is placed on an opening formed in a top of the grill and charcoal is filled in the grill for burning and flaming or a burner (such as infrared heater) is used. Food is placed on the grate for heating and cooking. The charcoal flaming or burner used in the conventional grill is arranged to directly face and irradiate thermal energy toward the grate in order to heat and cook food. The charcoal flaming or burner is set to directly face openings or slots of the grate that is placed above the flaming or burner so that a large amount of liquid of grilled food, such as sauce or grease/fat or juice of meat that is being grilled, may directly fall, in a vertical direction, onto the charcoal flaming or the burner during the grilling process. This leads to a large amount of thick smoke, which affects air quality and contaminates the food, and is also harmful to human bodies.

Further, it is also available for burners used as a heat source in a barbecue grill to cook food that a barbecue grid is placed on the opening formed in a top of the barbecue grill and a protection hood, in the form of an inverted V-shape, is provided inside the barbecue grill at a location above the burner. During grilling food, the protection hood provides shielding such that liquids, such as grease/fat of food, juice of meat, and sauce, will fall onto the protection hood and are prevented from dropping onto the burner to cause situations, such as catching a fire or inducing acidic/basic corrosion. However, such a known structure of barbecue grill suffers at least the following shortcomings:
(1) Due to the slots or opening formed between ribs or bars of the barbecue grate, the transmission and distribution of heating barbecue temperature is generally not uniform and is not homogenized such that food cannot be uniformly and evenly heated and cooked, affecting the taste and flavor of food so grilled.
(2) Although a protection hood is provided above the burners, since the conventional protection hood is generally provided with no openings, radiation heat that emits and irradiates from the upper side of the burner cannot be directly applied to the barbecue grate so that waste of thermal energy results and manufacturing cost of the grill is increased.
(3) Although the protection hood is provided to prevent liquids, such as grease/fat of food, juice of meat, and sauce, from directly dropping onto the burner, the protection hood itself is also heated by the radiation energy of the burner during a process of grilling food such that the liquids of food grease/fat, meat juice, and sauce that drop onto the protection hood also catch a fire on the protection hood and similarly generate a large amount of smoke.
(4) The V-shaped protection hood is arranged above the burner and is thus set at a relatively high location, so that liquids, such as grease/fat, meat juice, and sauce, are hard to drop onto a grease tray arranged thereunder.

Thus, the conventional structure of barbecue grill, as discussed above, when used for barbecuing or roasting or grilling food with a barbecue grill, does not achieve an effect of temperature homogenization and protection and does not provide an efficacy of true smoke-free grilling. Further, the protection hood is also not in a perfect condition. Thus, further improvement is necessary.

Prior art patent documents are known, such as US 2008/034982 A1, which discloses a smokeless barbecue grill, including infrared burners that are shielded by shield members having openings through which heat may be spread. A heat dissipator is provided between two shoulders at two opposite sides to lower temperature of oil and sauce separated from food. The heat dissipator includes holes for the passage of oil and sauce therethrough. A basin is provided below the heat dissipator to receive oil and sauce dropping through the holes of the heat dissipator. However, no guiding means is provided for guiding the oil and sauce into the basin.

US 2004/112362 A1 discloses a cooking grate for use in a barbeque grill. The grate has a grease control assembly that is cooperatively positioned over a burner flame region to direct and control the flow of grease generated by cooking food on the grate. However, on guiding means is provided for guiding and collecting the grease dropping from the grate.

In view of the above, the present invention aims to provide a solution that helps overcome the above discussed drawbacks and shortcomings of the prior art.

### SUMMARY OF THE INVENTION

The primary objective of the present invention is to provide a barbecue grill, which comprises a temperature homogenization protection section and is provided with an inclined, upward-facing arrangement of a burner and an M-shaped grease guide and temperature barrier board so that the structure, as a whole, helps homogenize a grilling temperature, provides protection to the burner, and also prevents liquids, such as grease/fat of grilled food, meat juice, and sauce, from dropping onto the burner, and conducts, in a more effective manner, grease to a grease tray.

To achieve the above objective, the present invention comprises at least one burner, a grate, and a grease guide and temperature barrier board, wherein the burner comprises a heat generation section and is arranged in an inclined, upward-facing manner in a barbecue grill. The grate is arranged in a top opening of the barbecue grill, and the grate comprises a plurality of ribs. The ribs define therebetween a plurality of openings. The ribs are provided with at least one temperature homogenization protection section, and the temperature homogenization protection section is arranged above and corresponding to the heat generation section to shield a portion of the openings in order to uniformly distribute convection temperature caused by the heat generation section. The temperature homogenization protection section has two opposite side edges that comprise ribs extending downward therefrom to guide grease of grilled food to flow downward along the ribs to drop down therefrom. The grease guide and temperature barrier board is configured in an M-shape located under the burner. The grease guide and temperature barrier board is arranged in the barbecue grill and located under the burner to guide the grease of the grilled food to drop down onto a grease tray located on the underside thereof. The burner comprises an infrared heater and the temperature homogenization protection section is arranged above and corresponding to the infrared heater such that an entire surface of a bottom of the temperature homogenization protection sections is allowed to directly receive radiation thermal energy emitting from the infrared heater to thereby enhance homogenization of grilling temperature.

As such, the temperature homogenization protection section so provided, as well as the inclined, upward-facing arrangement of the burner and the M-shaped grease guide and temperature barrier board, help homogenize the grilling temperature, protect the burner, and effectively guide and conduct away grease.

Beneficial efficacies of the present invention are as follows:
(1) The temperature homogenization protection section provides a temperature homogenization protection zone in the grate to help uniformly distribute convective temperature above the upward-facing and inclinedly arranged burners and prevents liquids, such as grease/fat of food being grilled, juice of meat, and sauce, from dropping down onto the burners to potentially catch a fire or generate smoke.
(2) The burners are arranged in an inclined and upward facing manner so as to face the bottom of the grate in an inclined manner, allowing thermal energy, such as infrared thermal energy, emitting from the burners to be transmitted in a direction toward the grate located on the top side thereof and also toward spaces above and around the grate to improve performance of grilling.
(3) The M-shaped grease guide and temperature barrier board, as compared to the conventional inverted V-shaped protection hood, is more effective in guiding liquids, such as grease/fat, meat juice, and sauce, to drop down onto a grease tray located on the under side and, in addition, the grease guide and temperature barrier board is set at a location of a reduced height so as to effectively reduce the temperature of the grease guide and temperature barrier board, making it difficult for grease attaching to the grease guide and temperature barrier board to catch fire.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a cross-sectional view of the present invention.
FIG 2 is a cross-sectional view showing an example demonstrating a use of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

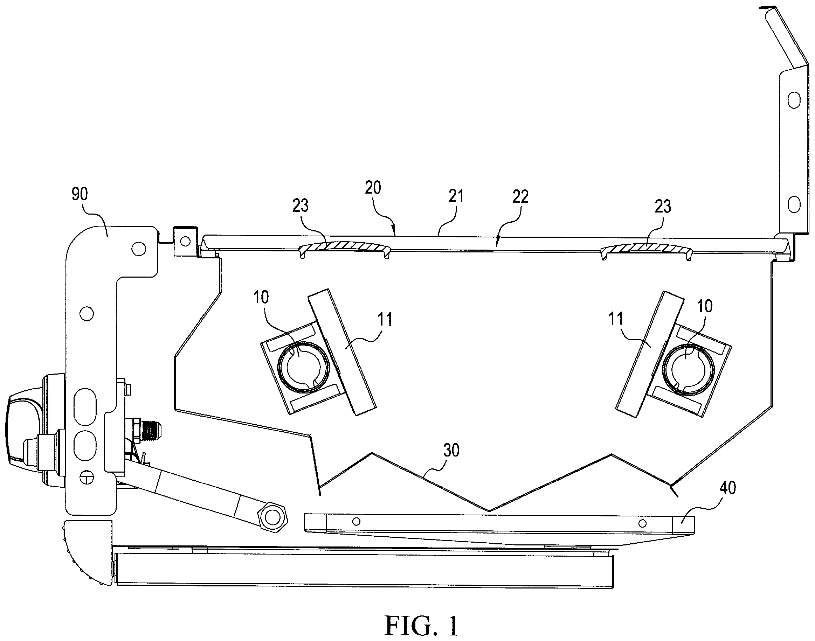

Referring to FIG 1, the present invention is applicable to a barbecue grill 90, and a preferred embodiment of the present invention comprises two burners 10, a grate 20, and a grease guide and temperature barrier board 30. Details will be provided below:
The burners 10 each comprise a heat generation section 11 and are arranged, in an inclined, upward-facing manner, in the barbecue grill 90.

The grate 20 is arranged in a top opening of the barbecue grill 90. The grate 20 comprises a plurality of ribs 21, and the ribs 21 define therebetween a plurality of openings 22. The ribs 21 are provided with at least one temperature homogenization protection section 23, and two being provided in this embodiment. The temperature homogenization protection sections 23 are arranged above and correspond respectively to the heat generation sections 11.

The grease guide and temperature barrier board 30 is configured in the form of an M-shape. The grease guide and temperature barrier board 30 is arranged in the barbecue grill 90 and located below the burners 10.

In an embodiment, two such burners 10 are included and the heat generation sections 11 are arranged, in a manner of being opposite to each other, to face a middle of the barbecue grill 90.

In an embodiment, the temperature homogenization protection sections 23 of the grate 20 are arranged in two opposite side zones of the grate 20.

In an embodiment, the temperature homogenization protection sections 23 of the grate 20 are arranged on a bottom of the ribs 21 and shield a portion of the openings 22 of the grate 20 such that an entire surface of a bottom of each of the temperature homogenization protection sections 23 is allowed to directly receive radiation thermal energy emitting from the burner 10 to thereby enhance performance of homogenization of grilling temperature.

In an embodiment, the burners 10 are infrared heaters.

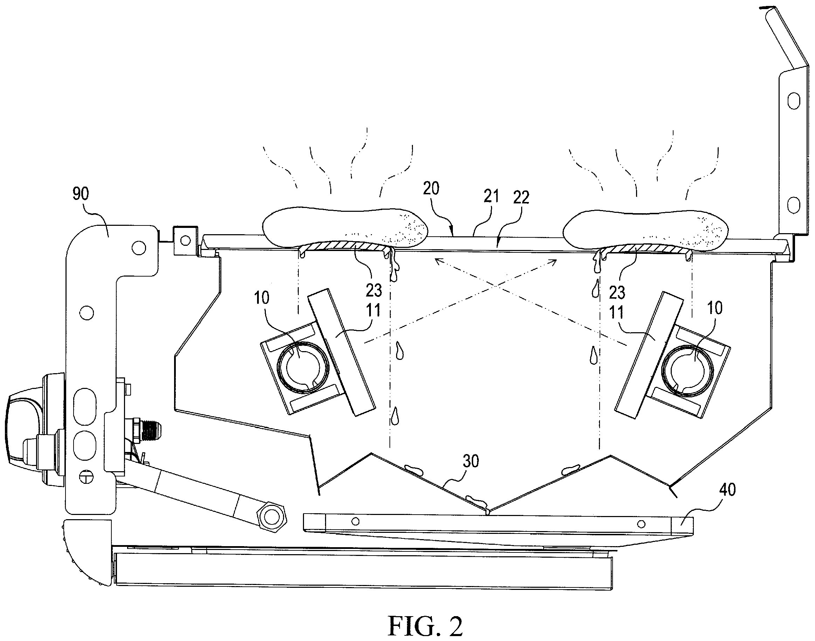

Referring to FIGS. 1 and 2, in an embodiment, the temperature homogenization protection sections 23 of the grate 20 are each configured with a top surface that is curved, in an upward convex form, to facilitate guide grease of grilled food to flow toward two opposite sides of the temperature homogenization protection section 23.

The temperature homogenization protection sections 23 of the grate 20 are each provided, on two opposite side edges thereof, with ribs that extend downward therefrom to guide the grease of the grilled food to flow downward along the ribs to drop down therefrom so as to prevent the grease of the grilled food from flowing to bottoms of the temperature homogenization protection section 23 and dropping down onto the heat generation section 11.

The above provides a description to the components/parts of the present invention, as well as assembly thereof, and an example of use, features, and advantages of the present invention will be provided below.

Referring to FIG 2, the present invention is structured such that the temperature homogenization protection sections 23, together with the burners 10 being arranged in an inclined and upward facing manner and an M-shaped grease guide and temperature barrier board 30 being included, are provided to help homogenize the grilling temperature, protect the burners 10, and effectively guide and conduct away grease.

Beneficial efficacies of the present invention are as follows:
(1) The temperature homogenization protection section 23 provides a temperature homogenization protection zone in the grate 20 to help uniformly distribute convective temperature above the upward-facing and inclinedly arranged burners 10 and prevents liquids, such as grease/fat of food being grilled, juice of meat, and sauce, from dropping down onto the burners 10 to potentially catch a fire or generate smoke.
(2) The burners 10 are arranged in an inclined and upward facing manner so as to face the bottom of the grate 20 in an inclined manner, allowing thermal energy, such as infrared thermal energy, emitting from the burners 10 to be transmitted in a direction toward the grate 20 located on the top side thereof and also toward spaces above and around the grate 20 to improve performance of grilling.
(3) The M-shaped grease guide and temperature barrier board 30, as compared to the conventional inverted V-shaped protection hood, is more effective in guiding liquids, such as grease/fat, meat juice, and sauce, to drop down onto a grease tray 40 located on the under side and, in addition, the grease guide and temperature barrier board 30 is set at a location of a reduced height so as to effectively reduce the temperature of the grease guide and temperature barrier board 30, making it difficult for grease attaching to the grease guide and temperature barrier board 30 to catch fire.

It will be understood that each of the elements described above, or two or more together may also find a useful application in other types of methods differing from the type described above.

## Claims

1. A barbecue grill, comprising:
at least one burner (10), which comprises a heat generation section (11) and is arranged in an inclined, upward-facing manner in a barbecue grill (90);
a grate (20), which is arranged in a top opening of the barbecue grill (90), the grate (20) comprising a plurality of ribs (21), the ribs (21) defining therebetween a plurality of openings (22), the ribs (21) being provided with at least one temperature homogenization protection section (23), the temperature homogenization protection section (23) being arranged above and corresponding to the heat generation section (11) to shield a portion of the openings (22) in order to uniformly distribute convection temperature caused by the heat generation section (11); and
**characterized in that** the temperature homogenization protection section (23) has two opposite side edges that comprise ribs extending downward therefrom to guide grease of grilled food to flow downward along the ribs to drop down therefrom and a grease guide and temperature barrier board (30), which is configured in an M-shape located under the burner (10), the grease guide and temperature barrier board (30) being arranged in the barbecue grill (90) and located under the burner (10) to guide the grease of the grilled food to drop down onto a grease tray (40) located on the underside thereof; and
the burner (10) comprises an infrared heater and the temperature homogenization protection section (23) is arranged above and corresponding to the infrared heater such that an entire surface of a bottom of the temperature homogenization protection sections (23) is allowed to directly receive radiation thermal energy emitting from the infrared heater to thereby enhance homogenization of grilling temperature.

2. The barbecue grill according to claim 1, wherein the at least one burner (10) comprises two burners (10) such that two heat generation sections (11) of the two burners (10) are arranged, in a manner of being opposite to each other, to face a middle of the barbecue grill (90).

3. The barbecue grill according to claim 1, wherein the temperature homogenization protection section (23) of the grate (20) is arranged in two opposite side zones of the grate (20).

4. The barbecue grill according to claim 1, wherein the temperature homogenization protection section (23) of the grate (20) is arranged on a bottom of the ribs (21) and shields a portion of the openings (22) of the grate (20).

5. The barbecue grill according to claim 1, wherein the temperature homogenization protection section (23) of the grate (20) has a top that is curved.

## Patentansprüche

1. Grill, der Folgendes umfasst:
mindestens einen Brenner (10), der einen Hitzeerzeugungsabschnitt (11) umfasst und in einer geneigten, nach oben gerichteten Weise in einem Grill (90) angebracht ist;
ein Gitter (20), das in einer oberen Öffnung des Grills (90) angebracht ist, wobei das Gitter (20) eine Vielzahl von Rippen (21) umfasst, wobei die Rippen (21) dazwischen eine Vielzahl von Öffnungen (22) definieren, wobei die Rippen (21) mit mindestens einem Temperaturhomogenisierungsschutzabschnitt (23) ausgestattet sind, wobei der Temperaturhomogenisierungsschutzabschnitt (23) oberhalb und entsprechend dem Hitzeerzeugungsabschnitt (11) zum Abschirmen eines Teils der Öffnungen (22) angebracht ist, um die Konvektionstemperatur, die durch den Hitzeerzeugungsabschnitt (11) hervorgerufen wird, gleichmäßig zu verteilen; und
**dadurch gekennzeichnet, dass** der Temperaturhomogenisierungsschutzabschnitt (23) zwei gegenüberliegende Seitenkanten hat, die Rippen umfassen, die sich von dort nach unten erstrecken, um das Fett von gegrillten Lebensmitteln zu leiten, um entlang der Rippen nach unten zu fließen, um von dort herunterzufallen, und eine Fettführung und eine Temperatursperrplatte (30), welche in einer M-Form konfiguriert ist, die sich unter dem Brenner (10) befinden, wobei die Fettführung und die Temperatursperrplatte (30) in dem Grill (90) angebracht sind und sich unter dem Brenner (10) befinden, um das Fett der gegrillten Lebensmittel zu leiten, um nach unten auf eine Fettschale (40) zu fallen, die sich an der Unterseite davon befindet; und
der Brenner (10) einen Infrarotheizer umfasst und der Temperaturhomogenisierungsschutzabschnitt (23) oberhalb und entsprechend dem Infrarotheizer angebracht ist, so dass eine gesamte Oberfläche eines Bodens der Temperaturhomogenisierungsschutzabschnitte (23) direkt Strahlungswärmeenergie empfangen darf, die von dem Infrarotheizer emittiert wird, um dadurch die Homogenisierung der Grilltemperatur zu verbessern.

2. Grill nach Anspruch 1, wobei der mindestens eine Brenner (10) zwei Brenner (10) umfasst, so dass zwei Hitzeerzeugungsabschnitte (11) der beiden Brenner (10) in einander gegenüberliegenden Weise angebracht sind, um einer Mitte des Grills (90) gegenüberzuliegen.

3. Grill nach Anspruch 1, wobei der Temperaturhomogenisierungsschutzabschnitt (23) des Gitters (20) in zwei gegenüberliegenden Seitenzonen des Gitters (20) angebracht ist.

4. Grill nach Anspruch 1, wobei der Temperaturhomogenisierungsschutzabschnitt (23) des Gitters (20) auf einem Boden der Rippen (21) angebracht ist und einen Teil der Öffnungen (22) des Gitters (20) abschirmt.

5. Grill nach Anspruch 1, wobei der Temperaturhomogenisierungsschutzabschnitt (23) des Gitters (20) eine gebogene Oberseite hat.

## Revendications

1. Grille de barbecue, comprenant :
au moins un brûleur (10), qui comprend une section de génération de chaleur (11) et est disposé de manière inclinée, orientée vers le haut dans une grille de barbecue (90) ;
une grille (20), qui est disposée dans une ouverture supérieure de la grille du barbecue (90), la grille (20) comprenant une pluralité de nervures (21), les nervures (21) définissant entre elles une pluralité d'ouvertures (22), les nervures (21) étant pourvues d'au moins une section de protection d'homogénéisation de température (23), la section de protection d'homogénéisation de température (23) étant disposée au-dessus et correspondant à la section de génération de chaleur (11) pour protéger une partie des ouvertures (22) afin de répartir uniformément la température de convection provoquée par la section de génération de chaleur (11) et
**caractérisée en ce que** la section de protection d'homogénéisation de température (23) a deux bords latéraux opposés qui comprennent des nervures s'étendant vers le bas à partir de celle-ci pour guider la graisse des aliments grillés à s'écouler vers le bas le long des nervures pour en descendre et un guide de graisse et une plaque de barrière de température (30), qui est configurée en forme de M située sous le brûleur (10), le guide de graisse et la plaque de barrière de température (30) étant disposés dans la grille du barbecue (90) et situés sous le brûleur (10) pour guider la graisse des aliments grillés vers un bac à graisse et s'y écouler (40) le bac à graisse étant situé sur le dessous, et
le brûleur (10) comprend un radiateur infrarouge, et la section de protection d'homogénéisation de température (23) est disposée au-dessus et correspondant au radiateur infrarouge de telle sorte qu'une surface entière d'un fond des sections de protection d'homogénéisation de température (23) puisse recevoir directement le rayonnement de l'énergie thermique émise par le radiateur infrarouge pour améliorer ainsi l'homogénéisation de la température de cuisson.

2. Grille de barbecue selon la revendication 1, où ledit brûleur (10) comprend deux brûleurs (10) de telle sorte que deux sections de génération de chaleur (10) des deux brûleurs (10) sont disposées, de manière opposée, face au milieu de la grille du barbecue (90).

3. Grille de barbecue selon la revendication 1, où la section de protection d'homogénéisation de température (23) de la grille (20) est disposée dans deux zones latérales opposées de la grille (20).

4. Grille de barbecue selon la revendication 1, où la section de protection d'homogénéisation de température (23) de la grille (20) est disposée sur un fond des nervures (21) et protège une partie des ouvertures (22) de la grille (20).

5. Grille de barbecue selon la revendication 1, où la section de protection d'homogénéisation de température (23) de la grille (20) a un dessus qui est incurvé.
